# EUROPEAN PATENT APPLICATION

(11) **EP 4 400 233 A1**
(43) Date of publication of application: **17.07.2024**
(21) Application number: 22866912.3
(22) Date of filing: 10.02.2022
(51) Int. Cl.: B22F 7/00, B22F 7/06, B23B 27/14, C22C 29/08, C22C 19/03, C22C 19/05, B33Y 10/00, B33Y 80/00, B33Y 70/10, B22F 3/16, B22F 1/00, B22F 10/25, B22F 10/362, B22F 10/366, B22F 10/64

(54) **CERMET COMPOSITE MATERIAL AND MANUFACTURING METHOD THEREOF, AND CERMET TOOL**

(30) Priority: 10.09.2021 JP 2021147789
(71) Applicant: Proterial, Ltd., Tokyo 135-0061 (JP)
(72) Inventor: SHIRATORI Hiroshi, Tokyo 100-8280 (JP); KOSEKI Shuho, Tokyo 1350061 (JP); OKAMOTO Shinya, Tokyo 1350061 (JP); KUWABARA Kousuke, Tokyo 1350061 (JP); ANDOH Shinsuke, Tokyo 1350061 (JP)
(74) Representative: MERH-IP Matias Erny Reichl Hoffmann Patentanwälte PartG mbB
(86) International application number: PCT/JP2022/005393
(87) International publication number: WO 2023/037577

(57) **Abstract**

The invention provides a cermet composite material that can improve a bond strength between a cermet part and a non-cermet part without heat treatment at high temperature. The cermet composite material according to the invention comprises a cermet part including hard carbides dispersed in a metallic phase and a non-cermet part consisting of a Ni-based alloy including 50% by mass or more of Ni with the cermet part being formed on the non-cermet part by additive manufacturing, wherein the cermet composite material comprises an intermediate layer including both components of the cermet part and components of the non-cermet part between the cermet part and the non-cermet part, and the non-cermet part consists of the Ni-based alloy including 3.0% by mass to 15.0% by mass of Ti or the Ni-based alloy including 0.5% by mass to less than 3.0% by mass of Ti and 4% by mass to 15% by mass of Nb and Ta in total.

## Description

### Technical Field

The present invention relates to a cermet composite material comprising a cermet part and a non-cermet part, a method for producing the same, and a cermet tool using the cermet composite material.

### Background Art

The invention concerning a method for coupling a cermet that is excellent in abrasion resistance and another material such as steel by sintering to produce a composite material and a composite material produced by the method for producing such composite material has heretofore been known (see Patent Literature 1). Patent Literature 1 discloses that a strong metallurgical bond is formed between cemented carbide and another material by introducing a powder consisting of a type of a cermet, cemented carbide powder, and another material, such as steel or nickel, into a mold, co-pressing (co-compressing), and binding the same by sintering at high temperature.

The invention concerning a method for producing a composite material of cemented carbide and non-cemented carbide that has excellent strength at high temperature and can suppress cracking or peeling and a cemented carbide tool produced by the method for producing the composite material is also known (see Patent Literature 2). Patent Literature 2 discloses a cermet composite material comprising: a cemented carbide part including WC-Co-based cemented carbide; a substrate part including metal that contains at least one selected from the group of Ni and Co that accounts for 50 mass % or more in total; and an intermediate layer including both components of the cemented carbide part and components of the substrate part between the cemented carbide part and the substrate part, wherein the intermediate layer includes a part having a gamma phase fraction of 80% or more and Vickers hardness of less than 700 HV. Since the intermediate layer of the cermet composite material includes a part having a gamma phase fraction of 80% or more and Vickers hardness of less than 700 HV, cracking does not occur at the interface between the cemented carbide part and the substrate part, and a strong bond can be formed between the cemented carbide part and the substrate part.

### Citation List

### Patent Literature

Patent Literature 1: JP 2011-523681 A
Patent Literature 2: WO 2019/069701

### Summary of Invention

### Technical Problem

While Patent Literature 1 discloses that a metallurgical bond is formed between cemented carbide and non-cemented carbide, a region wherein both components of cemented carbide and components of non-cemented carbide are mixed is not sufficiently formed by sintering. At a high load, accordingly, cracking may occur at the interface.

The cermet composite material disclosed in Patent Literature 2 comprises an intermediate layer including both components of the cemented carbide part and components of the substrate part between the cemented carbide part including WC-Co-based cemented carbide and the substrate part including metal that contains at least one selected from the group of Ni and Co that accounts for 50 mass % or more in total. The cermet composite material is considered to have achieved a strong bond because of the presence of the intermediate layer. Meanwhile, Patent Literature 2 discloses that the intermediate layer includes a given amount of M₆C carbide. Also, the results of the reproductive experiment performed by the inventor of Patent Literature 2 demonstrate that free carbon is present in the intermediate layer. M₆C carbide and free carbon are considered to be harmful phases, and the presence thereof may cause cracking at the interface between the cemented carbide part and the substrate part when a high load is applied. While Patent Literature 2 discloses that heat treatment at 1000°C to 1300°C allows diffusion and elimination of M₆C carbide and free carbon, heat treatment at such temperature may often be difficult due to the restriction on the substrate, depending on the intended use.

The present invention has been completed under the above circumstances, and the primary object of the present invention is to provide a cermet composite material comprising a cermet part and a non-cermet part, in which a bond strength between the cermet part and the non-cermet part can be improved without heat treatment at high temperature, a method for producing such cermet composite material, and a cermet tool.

### Solution to Problem

In order to dissolve the problem described above, the cermet composite material according to the present invention comprises a cermet part including hard carbides dispersed in a metallic phase and a non-cermet part consisting of a Ni-based alloy including 50% by mass or more of Ni with the cermet part being formed on the non-cermet part by additive manufacturing, wherein the cermet composite material comprises an intermediate layer including both components of the cermet part and components of the non-cermet part between the cermet part and the non-cermet part, and the non-cermet part consists of the Ni-based alloy including 3.0% by mass to 15.0% by mass of Ti or the Ni-based alloy including 0.5% by mass to less than 3.0% by mass of Ti and 4% by mass to 15% by mass of Nb and Ta in total.

The method for producing the cermet composite material according to the present invention is a method for producing a cermet composite material comprising a cermet part including hard carbides dispersed in a metallic phase and a non-cermet part consisting of a Ni-based alloy including 50% by mass or more of Ni and 3.0% to 15.0% by mass of Ti or a Ni-based alloy including 50% by mass or more of Ni, 0.5% to less than 3.0% by mass of Ti, and 4% to 15% by mass of Nb and Ta in total, comprising a step of preheating for preheating the non-cermet part to 350°C to 800°C and a step of producing a composite material for producing a cermet composite material comprising a cermet part formed on the non-cermet part by additive manufacturing and an intermediate layer including both components of the non-cermet part and components of the cermet part between the non-cermet part and the cermet part.

In addition, the cermet tool of the present invention is a cermet tool using the cermet composite material described above, which comprises a part for machining configured to machine a workpiece and a base configured to support the part for machining, wherein the part for machining is the cermet part, and a region on the part for machining side of the base is the non-cermet part.

The present description includes part or all of the contents as disclosed in the description and/or drawings of Japanese Patent Application No. 2021-147789, which is a priority document of the present application.

### Advantageous Effects of Invention

According to the present invention, the bond strength between a cermet part and a non-cermet part can be improved without heat treatment at high temperature.

### Brief Description of Drawings

[Figure 1 A] Figure 1 A is a schematic cross-sectional view showing an example of the cermet composite material according to the embodiment.
[Figure 1 B] Figure 1 B is a schematic cross-sectional view showing another example of the cermet composite material according to the embodiment.
[Figure 2] Figure 2 is a cross-sectional photograph showing the cermet composite material shown in Figure 1 A.
[Figure 3] Figure 3 is a chart demonstrating the results of measurement of the number of counted X-rays for tungsten by EPMA in the cermet composite materials shown in Figure 1 A and Figure 2.
[Figure 4] Figure 4 is a flow diagram demonstrating an example of the method for producing the cermet composite material according to the embodiment.
[Figure 5] Figure 5 is a front view showing an example of the cermet tool according to the embodiment.
[Figure 6] Figure 6 is a cross-sectional view showing another example of the cermet tool according to the embodiment.
[Figure 7] Figure 7 is a cross-sectional photograph showing the results of observation of incomplete fusion in the intermediate layer of Comparative Example 2.
[Figure 8 A] Figure 8 A is a backscattered electron image of a crystalline structure in the intermediate layer of Comparative Example 1 obtained by SEM.
[Figure 8 B] Figure 8 B is a backscattered electron image of a crystalline structure in the intermediate layer of Comparative Example 2 obtained by SEM.
[Figure 8 C] Figure 8 C is a backscattered electron image of a crystalline structure in the intermediate layer of Example 1 obtained by SEM.
[Figure 8 D] Figure 8 D is a backscattered electron image of a crystalline structure in the intermediate layer of Example 2 obtained by SEM.
[Figure 8 E] Figure 8 E is a backscattered electron image of a crystalline structure in the intermediate layer of Example 3 obtained by SEM.
[Figure 8 F] Figure 8 F is a backscattered electron image of a crystalline structure in the intermediate layer of Example 4 obtained by SEM.
[Figure 9 A] Figure 9 A is a TEM image of a crystalline structure in the intermediate layer of Example 4.
[Figure 9 B] Figure 9 B shows the results of elemental mapping of a crystalline structure in the intermediate layer of Example 4 performed by EDX.
[Figure 9 C] Figure 9 C shows the results of selected-area electron diffraction of the phase 50 in the intermediate layer of Example 4.
[Figure 9 D] Figure 9 D shows the results of selected-area electron diffraction of the phase 51 in the intermediate layer of Example 4.
[Figure 9 E] Figure 9 E shows the results of selected-area electron diffraction of the phase 52 in the intermediate layer of Example 4.
[Figure 9 F] Figure 9 F shows the results of selected-area electron diffraction of the phase 53 in the intermediate layer of Example 4.
[Figure 9 G] Figure 9 G shows the results of selected-area electron diffraction of the phase 54 in the intermediate layer of Example 4.

### Description of Embodiments

Hereafter, embodiments of the cermet composite material, the method for producing the same, and the cermet tool according to the present invention are described with reference to the figures and the like. The description provided below demonstrates specific examples of the disclosure of the present invention, and the present invention is not limited to these examples. A person skilled in the art can make various modification and improvement on the present invention within the technical scope disclosed herein. In all the figures illustrating the present invention, members having the identical function are indicated by the identical reference signs, and the repeated description thereof may be omitted.

The preposition "to" is used herein to include numerical values before and after the preposition as the lower limit and the upper limit. In numerical ranges demonstrated in phases herein, the upper or lower limit within a numerical range may be substituted with another upper or lower limit demonstrated in phases. The upper or lower limit within a numerical range provided herein may be substituted with a value provided in the examples.

When a material is selected from among materials exemplified below, a single material may be selected or a plurality of materials may be selected in combination within a scope consistent with the present disclosure. Alternatively, materials other than the materials exemplified below may be selected within a scope consistent with the present disclosure.

### [Cermet composite material]

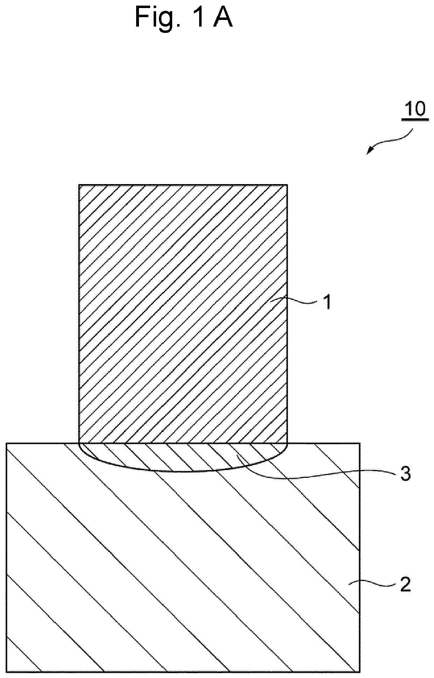

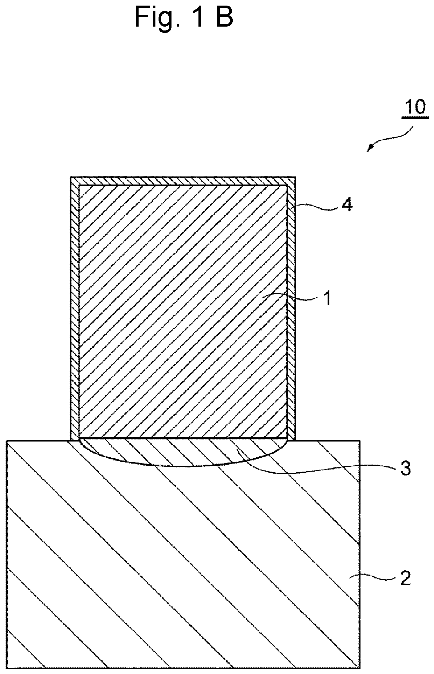

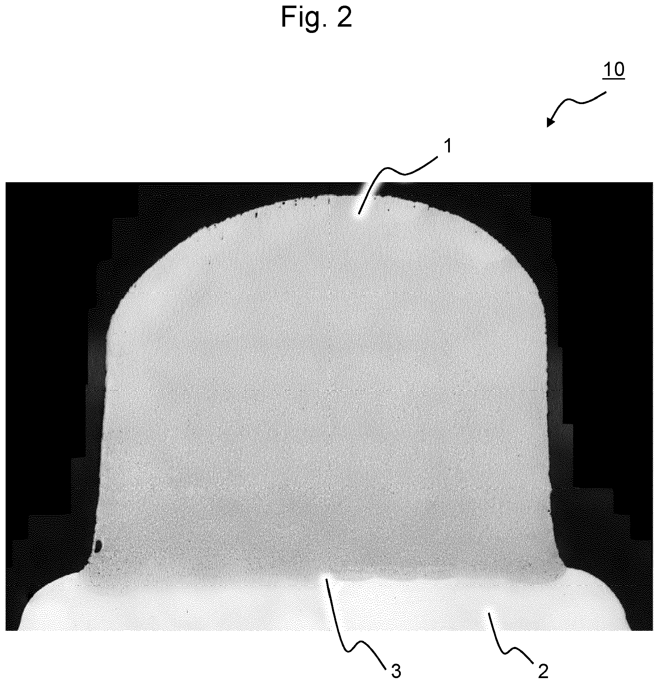

Figure 1 A and Figure 1 B are schematic cross-sectional views showing an example of the cermet composite material according to the embodiment and another example of the cermet composite material according to the embodiment, respectively. Figure 2 is a cross-sectional photograph showing the cermet composite material shown in Figure 1 A.

The cermet composite material 10 shown in Figure 1 A comprises a cermet part 1 and a non-cermet part 2, with the cermet part 1 being formed on the non-cermet part 2 by additive manufacturing. In addition, the cermet composite material 10 comprises an intermediate layer 3 including both components of the cermet part 1 and components of the non-cermet part 2 between the cermet part 1 and the non-cermet part 2 (an intermediate layer 3 between the cermet part 1 and the non-cermet part 2 wherein both components of the cermet part 1 and components of the non-cermet part 2 are mixed). The cermet part 1 includes, for example, a hard carbide selected from among tungsten carbide (WC), niobium carbide (NbC), tantalum carbide (TaC), molybdenum carbide (MoC), and vanadium carbide (VC) dispersed in a metallic phase including, as a binder phase, any of cobalt (Co), nickel (Ni), and iron (Fe). The non-cermet part 2 consists of a Ni-based alloy including 50% by mass or more of Ni and 3.0% by mass to 15.0% by mass of Ti.

The non-cermet part 2 of the cermet composite material 10 includes 3.0% by mass to 15.0% by mass of Ti that has an excellent carbide-forming ability. In the intermediate layer 3 formed when the cermet part 1 is formed on the non-cermet part 2 by additive manufacturing, accordingly, an embrittlement phase, such as M₆C carbide or free carbon, is less likely to be formed, and the intermediate layer 3 has a structure with excellent anti-crack properties with a given amount or more NaCl-type MC carbide being finely dispersed in a gamma phase. This can improve the bond strength between the cermet part 1 and the non-cermet part 2 and reduce the amount of M₆C carbide or free carbon in the intermediate layer 3 including both components of the cermet part 1 and components of the non-cermet part 2.

The cermet composite material 10 shown in Figure 1 B further comprises a hard coating 4 provided on the surface of the cermet part 1, in addition to the constitution of the cermet composite material 10 shown in Figure 1 A. The hard coating 4 can be formed by a method of nitriding of the surface of the cermet part 1, or a film-forming method, such as a method of chemical vapor deposition (CVD), or a method of physical vapor deposition (PDV). A material constituting the hard coating 4 is not particularly limited, and such material is preferably carbide, nitride, oxide, or carbonitride of at least one selected from the group consisting of Ti, Al, and Cr. Examples thereof include titanium carbide (TiC), titanium nitride (TiN), titanium carbonitride (TiCN), aluminum oxide (Al₂O₃), titanium aluminum nitride (TiAlN), and chromium nitride (CrN). Since the cermet composite material 10 comprises the hard coating 4 on the surface of the cermet part 1, abrasion resistance of the cermet part 1 can be improved.

Another example of the cermet composite material according to the embodiment comprises the cermet part 1 and the non-cermet part 2 as with the cermet composite material 10 shown in Figure 1 A with the cermet part 1 being formed on the non-cermet part 2 by additive manufacturing, and the cermet composite material comprises the intermediate layer 3 including both components of the cermet part 1 and components of the non-cermet part 2 between the cermet part 1 and the non-cermet part 2 (the intermediate layer 3 between the cermet part 1 and the non-cermet part 2 wherein both components of the cermet part 1 and components of the non-cermet part 2 are mixed). According to this example, the cermet part 1 includes, for example, a hard carbide selected from among tungsten carbide (WC), niobium carbide (NbC), tantalum carbide (TaC), molybdenum carbide (MoC), and vanadium carbide (VC) dispersed in a metallic phase including, as a binder phase, any of cobalt (Co), nickel (Ni), and iron (Fe), as with the case of the cermet composite material 10 shown in Figure 1 A. Unlike the cermet composite material 10 shown in Figure 1 A, the non-cermet part 2 consists of a Ni-based alloy including 50% by mass or more of Ni, 0.5% by mass to less than 3.0% by mass of Ti, and 4% by mass to 15% by mass of Nb and Ta in total.

While the non-cermet part 2 according to this example selectively includes 0.5% by mass to less than 3.0% by mass of Ti, it includes 4% by mass to 15% by mass of Nb and Ta with a high carbide-forming ability in total. In the intermediate layer 3 formed when the cermet part 1 is formed on the non-cermet part 2 by additive manufacturing, accordingly, an embrittlement phase, such as an M₆C carbide or free carbon, is less likely to be formed, and the intermediate layer 3 has a structure with excellent anti-crack properties with a given amount or more NaCl-type MC carbide being finely dispersed in a gamma phase. This can improve the bond strength between the cermet part 1 and the non-cermet part 2 and reduce the amount of M₆C carbide or free carbon in the intermediate layer 3.

Hereafter, constitutions of the cermet composite material according to the embodiment are described in greater detail.

### (Cermet part)

The cermet part 1 primarily includes, for example, a hard carbide selected from among tungsten carbide (WC), niobium carbide (NbC), tantalum carbide (TaC), molybdenum carbide (MoC), and vanadium carbide (VC) dispersed in a metallic phase using any of cobalt (Co), nickel (Ni), and iron (Fe) as the binder phase. A cermet part preferably consists of, for example, a WC-Co-based cemented carbide including WC hard carbide dispersed in a metallic phase using Co as the binder phase.

The cermet part 1 has improved toughness as the amount of a metallic phase of Co, Ni, Fe, or the like is increased, and cracking or peeling can be thus suppressed at the time of forming. As the amount of the metallic phase is increased, in contrast, strength and hardness are deteriorated. Accordingly, the cermet part 1 including at least one selected from the group of Co, Ni, and Fe in an amount of 20% by mass to 50% by mass with the balance consisting of hard carbide is preferable. When the cermet part 1 consists of a WC-Co-based cemented carbide, specifically, the cermet part 1 consisting of a WC-Co-based cemented carbide including 20% by mass to 50% by mass of Co with the balance consisting of tungsten carbide is preferable. This can prevent the cermet part 1 from cracking or peeling, and the cermet part 1 can be provided with toughness, strength, and hardness suitable for use as, for example, a tool. The Vickers hardness of the cermet part 1 is preferably, for example, 400 HV to 1000 HV.

The cermet part 1 can further include, for example, a very small amount of chromium (Cr), vanadium (V), titanium (Ti), tantalum (Ta), and niobium (Nb). Cr and V can suppress the grain growth and improve acid resistance of the carbide. Ti, Ta, and Nb have the effect of enlarging the sound phase of the structure. Finer carbide particles improve the strength and the toughness. Accordingly, the average particle diameter of carbide included in the cermet part 1 is preferably 50 µm or smaller. The average particle diameter of the carbide particles included in the cermet part 1 can be determined based on the average of equivalent circle diameters of the particles on a test plane prepared by cutting the cermet part 1.

### (Non-cermet part)

The non-cermet part 2 (the substrate part) consists of an Ni-based alloy including 50% by mass or more of Ni and 3.0% by mass to 15.0% by mass of Ti or a Ni-based alloy including 50% by mass or more of Ni, 0.5% to less than 3.0% by mass of Ti, and 4% to 15% by mass of Nb and Ta in total. The non-cermet part 2 is not particularly limited, provided that it consists of such Ni-based alloy. The non-cermet part 2 may consist of a Ni-based alloy that further includes, for example, another metal element or non-metal element other than metal elements, according to need, in addition to such components of the Ni-based alloy.

The Ni-based alloy including 50% by mass or more of Ni and 3.0% by mass to 15.0% by mass of Ti may include at least one element selected from among, for example, chromium (Cr), cobalt (Co), molybdenum (Mo), tungsten (W), niobium (Nb), aluminum (Al), iron (Fe), zirconium (Zr), tantalum (Ta), vanadium (V), hafnium (Hf), manganese (Mn), silicon (Si), lanthanum (La), magnesium (Mg), carbon (C), and boron (B), in addition to Ni and Ti. The Ni-based alloy may further include inevitable impurities.

The Ni-based alloy including 50% by mass or more of Ni, 0.5% to less than 3.0% by mass of Ti, and 4% to 15% by mass of Nb and Ta in total may include at least one element selected from among, for example, chromium (Cr), cobalt (Co), molybdenum (Mo), tungsten (W), aluminum (Al), iron (Fe), zirconium (Zr), vanadium (V), hafnium (Hf), manganese (Mn), silicon (Si), lanthanum (La), magnesium (Mg), carbon (C), and boron (B), in addition to Ni, Nb, and Ta. The Ni-based alloy may further include inevitable impurities.

In general, the Ni-based alloy is an alloy including a gamma phase as the main phase. When the non-cermet part 2 consists of a Ni-based alloy, accordingly, the intermediate layer 3 has a high gamma phase fraction. This can suppress significant deterioration of the toughness of the intermediate layer 3. In the case of a typical Ni-based alloy, however, embrittlement phases, such as M₆C carbide or free carbon, are generated in the intermediate layer 3 when the cermet part 1 is mixed with the non-cermet part 2. When Ni-based alloy is used for the non-cermet part 2, the gamma phase fraction in the intermediate layer 3 becomes high, and the toughness of the intermediate layer 3 is enhanced. While cracking at the time of production becomes less likely to occur because of such properties, the presence of the embrittlement phases may cause cracking in the intermediate layer 3 when a high load is applied on the cermet composite material 10.

In order to overcome such problem, the non-cermet part 2 includes 3.0% by mass or more Ti, and M₆C carbide or free carbon becomes less likely to be generated in the intermediate layer 3. Since Ti has a high carbide-forming ability; that is, Ti is likely to bind to a carbon, free carbon is less likely to be generated, and a NaCl-type MC carbide including Ti bound to a carbon is generated. As a consequence, M₆C carbide is less likely to be generated. MC carbide and the like are relatively finely dispersed. In comparison with the M₆C carbide generated as a dendritic coarse crystal, accordingly, anti-crack properties are improved. For the same reason, the non-cermet part 2 preferably includes 4% by mass or more Ti. When the Ti content in the non-cermet part 2 is more than 15.0% by mass, in contrast, stability of the M₆C carbide is improved again, and the M₆C carbide begins to crystallize. At the time of additive manufacturing of the cermet part 1, in addition, serious oxidation may occur and cause incomplete fusion, and the incomplete fusion may become the point of origin of breaking. Accordingly, it is necessary that the Ti content in the non-cermet part 2 be 15.0% by mass or less, and it is preferable that such content be 14% by mass or less. When the non-cermet part 2 includes 3.0% by mass to 15.0% by mass of Ti, more specifically, the intermediate layer 3 achieves a structure with high anti-crack properties, and a defect such as incomplete fusion becomes less likely to occur. Such action becomes more effective when the non-cermet part 2 includes 4% by mass to 14% by mass Ti.

Nb and Ta also have relatively high carbide-forming ability, although such activity is not as high as the carbide-forming ability of Ti. When the non-cermet part 2 includes 0.5% by mass to less than 3.0% by mass of Ti and 4% by mass to 15% by mass of Nb and Ta in total, accordingly, formation of MC carbide is also accelerated and anti-crack properties are also improved. Such non-cermet part 2 can be handled as with the case of the non-cermet part 2 including 3.0% by mass to 15.0% by mass of Ti. Nb and Ta are homologous elements and have equivalent standard energy to generate carbide. When the non-cermet part 2 includes 4% by mass to 15% by mass of Nb and Ta in total, accordingly, it may include both Nb and Ta, it may selectively include 4% by mass to 15% by mass Nb, or it may selectively include 4% by mass to 15% by mass Ta.

When the non-cermet part 2 includes given amounts or more of Cr and Fe, Cr is concentrated in the final solidification part because of the concentration distribution in the process of melting and solidification at the time of additive manufacturing of the cermet part 1, and, as a consequence, the σ, Laves, or another phase, which is a brittle intermetallic compound, is formed in the intermediate layer 3. This may increase the likelihood of causing cracking. Accordingly, the non-cermet part preferably includes 19.0% by mass or less of Cr and 25.0% by mass or less of Fe, more preferably 14.0% by mass or less of Cr and 18.0% by mass or less of Fe, and further preferably 10.0% by mass or less of Cr and 12.0% by mass or less of Fe.

The M₁₂C carbide is very similar to the M₆C carbide. These carbides are known to have very similar crystalline structures and properties in spite of different carbon-to-metal ratios. Whether the M₁₂C carbide or the M₆C carbide is generated depends on conditions, such as the components of the intermediate layer 3 or a cooling rate at the time of additive manufacturing. Accordingly, the M₆C carbide may be replaced with the M₁₂C carbide in some circumstances. This indicates that the M₁₂C carbide may be generated instead of at least a part of the M₆C carbide in the intermediate layer 3.

### (Intermediate layer)

The intermediate layer 3 is formed between the cermet part 1 and the non-cermet part 2, which is a region including both components of the cermet part 1 and components of the non-cermet part 2 (a region wherein both components of the cermet part 1 and components of the non-cermet part 2 are mixed). The intermediate layer 3 is formed on the binding interface between the cermet part 1 and the non-cermet part 2 or a region in the vicinity thereof at the time of production of the cermet composite material 10.

The intermediate layer 3 preferably has a thickness of 500 µm or more. When the intermediate layer 3 has a thickness of 500 µm or more, a bond between the cermet part 1 and the non-cermet part 2 becomes strong. When the intermediate layer 3 has a thickness of 500 µm or less, in contrast, a sufficient metallic bond is not formed. When strong stress is applied on the cermet composite material 10, accordingly, cracking or peeling is highly likely to occur in the intermediate layer 3.

In order to improve toughness, the intermediate layer 3 preferably includes carbide particles dispersed therein. The carbide particles preferably includes, for example, at least one selected from the group of the MC carbide and the tungsten carbide, although the carbide particles are not particularly limited thereto.

When carbide particles include MC carbides, the area ratio of MC carbides is preferably, for example, 3% to 24%. Such area ratio is preferable because effects of suppressing free carbons or M₆C carbides are insufficient when the area ratio is smaller than 3%. When the area ratio exceeds 24%, in contrast, oxidation resistance is significantly deteriorated and anti-crack properties are deteriorated because of excess carbides.

The area ratio and the average diameter of MC carbides and tungsten carbides can be determined by the electron backscatter diffraction (EBSD) method. For example, an area of 200 µm × 200 µm in the center of the intermediate layer on the plane cut along the direction of stacking the cermet composite materials is scanned and observed, and the area ratio and the average diameter of MC carbides and tungsten carbides can be determined as the area ratio and the average of equivalent circle diameters of the MC carbides and tungsten carbides observed on the measured screen. Also, the area ratio and the average diameter can be determined by digitizing the backscattered electron (BSE) image obtained using a field emission-scanning electron microscope (FE-SEM) at, for example, 1000× magnification.

In order to improve toughness, the intermediate layer 3 preferably includes a small amount of or no M₆C carbides or free carbons. The area ratio of M₆C carbides is, for example, preferably 24% or smaller, more preferably 20% or smaller, and particularly preferably 10% or smaller. The area ratio is preferably equivalent to or smaller than the upper limits indicated above because problems caused by embrittlement can be suppressed. The area ratio of free carbons is, for example, preferably 1.5% or smaller, more preferably 1% or smaller, and particularly preferably 0.5% or smaller. The area ratio is preferably equivalent to or smaller than the upper limits indicated above because problems caused by embrittlement can be suppressed.

The presence of M₆C carbides or free carbons may be determined by, for example, X-ray diffraction (XRD), observation under a scanning electron microscope (SEM), or EBSD analysis, although the method is not particularly limited thereto. The area ratio and the average diameter of M₆C carbides and free carbons are determined by the EBSD method. For example, an area of 200 µm × 200 µm in the center of the intermediate layer on the plane cut along the direction of stacking the cermet composite materials is scanned and observed, and the area ratio and the average diameter of M₆C carbides and free carbons can be determined as the area ratio and the average of equivalent circle diameters of the M₆C carbides and free carbons observed on the measured screen. Also, the area ratio and the average diameter can be determined by digitizing the BSE image obtained at 1000× magnification.

The porosity fraction of the intermediate layer 3 is preferably 1% or lower in order to suppress deterioration in the fatigue life of the cermet composite material 10. The porosity fraction can be determined by, for example, observing a cross section of a sample under a microscope, determining the area of the cross section of the sample, and determining the area of the visible gaps (void spaces).

In order to improve toughness, the intermediate layer 3 preferably includes a small amount of or no intermetallic compound, such as the σ or Laves phase. In the intermediate layer 3, the area ratio of a brittle intermetallic compound including the σ, Laves, or another phase is, for example, preferably 8% or smaller, more preferably 5% or smaller, and particularly preferably 2% or smaller. The area ratio is preferably equivalent to or smaller than the upper limits indicated above because problems caused by embrittlement can be suppressed. Basically, the σ or Laves phase is a Cr-concentrated phase. Accordingly, the area ratio of an intermetallic compound including the σ, Laves, or another phase can be determined by performing, for example, elemental mapping of Cy by energy dispersive X-ray spectroscopy (EDX).

The presence of the intermediate layer 3 can be determined by appearance, as shown in Figure 2. In contrast, the boundary between the cermet part 1 and the intermediate layer 3 and the boundary between the intermediate layer 3 and the non-cermet part 2 may not be clearly determined by appearance observed under, for example, a microscope in some circumstances. In such a case, the boundary between the cermet part 1 and the intermediate layer 3 and the boundary between the intermediate layer 3 and the non-cermet part 2 can be defined with the use of, for example, an electron probe micro analyzer (EPMA).

A method for defining the boundary between the cermet part 1 and the intermediate layer 3 and the boundary between the intermediate layer 3 and the non-cermet part 2 by EPMA when the cermet part 1 of the cermet composite material 10 shown in Figure 1 A consists of WC-Co cemented carbides is described.

In this method, the cermet composite material 10 is first cut, so as to observe the cermet part 1 and the non-cermet part 2 on the same cross section as shown in Figure 2. As shown in Figure 2, the cermet part 1 can be easily distinguished from the non-cermet part 2. Subsequently, line analysis is performed by EPMA with the steps of 20 µm from the cermet part 1 toward the non-cermet part 2 while setting the spot size at 0 µm to determine the number of counted X-rays for tungsten.

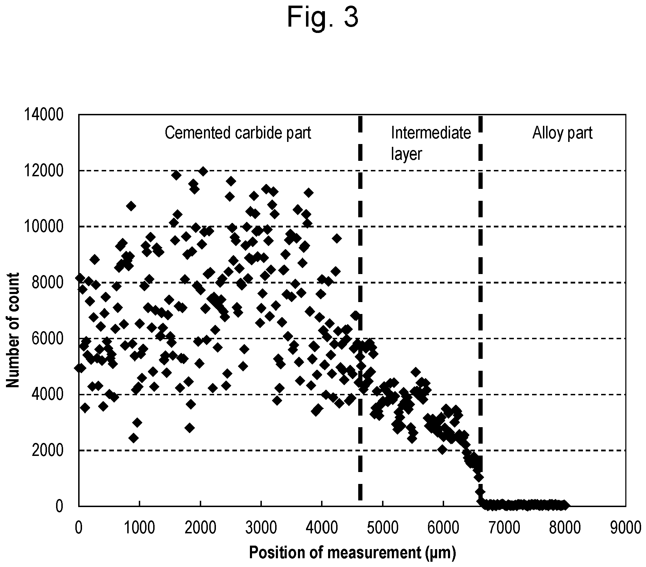

Figure 3 is a chart demonstrating the results of measurement of the number of counted X-rays for tungsten by EPMA in the cermet composite materials shown in Figure 1 A and Figure 2. In Figure 3, the horizontal axis indicates the position of measurement (µm), which is a distance from the starting point of measurement and the vertical axis indicates the number of counted X-rays for tungsten. A substantive boundary between the cermet part 1 (the WC-Co cemented carbide part) and the intermediate layer 3 and a substantive boundary between the intermediate layer 3 and the non-cermet part 2 (the alloy part) can be defined based on, for example, a fluctuating width in the number of counted X-rays for tungsten.

In the case of the cermet composite material 10 which is the cermet part 1 consisting of WC-Co cemented carbides, specifically, a fluctuating width in the number of counted X-rays for tungsten between adjacent points of analysis is approximately ± 10% in the intermediate layer 3. In the cermet part 1, however, a fluctuating width in the number of counted X-rays for tungsten between adjacent points of analysis is approximately ± 20% or more. In addition, the number of counted X-rays for tungsten and the fluctuating width in the number of counted X-rays for tungsten in the non-cermet part 2 are significantly smaller than those in the cermet part 1 and the intermediate layer 3. For example, Figure 3 demonstrates that a fluctuating width in the number of counted X-rays for tungsten varies as a result of mixing of components of the cermet part 1 and components of the non-cermet part 2 in the intermediate layer 3. By measuring the number of counted X-rays for elements constituting the carbides in the cermet part 1 by EPMA on the cross section of the cermet composite material 10, accordingly, the substantive boundary between the cermet part 1 and the intermediate layer 3 and the substantive boundary between the intermediate layer 3 and the non-cermet part 2 can be defined.

As described above, the embodiment can provide the cermet composite material 10 comprising the cermet part 1 and the non-cermet part 2 with the cermet part 1 being formed on the non-cermet part 2 by additive manufacturing, wherein a bond strength between the cermet part 1 and the non-cermet part 2 can be improved and the amount of M₆C carbides or free carbons in the intermediate layer 3 including both components of the cermet part 1 and components of the non-cermet part 2 can be reduced.

### [Method for producing cermet composite material]

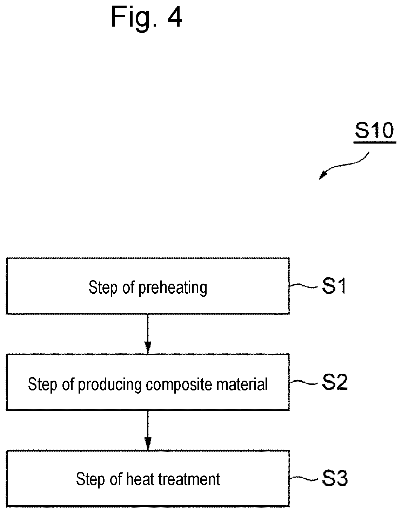

Figure 4 is a flow chart demonstrating an example of the method for producing the cermet composite material according to the embodiment.

The method S10 for producing the cermet composite material shown in Figure 4 is a method for producing the cermet composite material 10 comprising the cermet part 1 and the non-cermet part 2 according to the embodiment. The method S10 for producing the cermet composite material comprises a step S1 of preheating and a step S2 of producing a composite material. The method S10 for producing the cermet composite material may further comprises a step S3 of heat treatment. Hereafter, constitutions of the method for producing the cermet composite material according to the embodiment are described in greater detail.

### (Step of preheating)

The step S1 of preheating is a step for preheating the non-cermet part 2 consisting of an Ni-based alloy including 50% by mass or more of Ni and 3.0% by mass to 15.0% by mass of Ti or a Ni-based alloy including 50% by mass or more of Ni, 0.5% to less than 3.0% by mass of Ti, and 4% to 15% by mass of Nb and Ta in total to 350°C to 800°C. The non-cermet part 2 to be preheated is the same as the non-cermet part 2 described in the [Cermet composite material] section above, except that the cermet part 1 is not formed on the non-cermet part 2 by additive manufacturing. A method of preheating in the step S1 of preheating is not particularly limited. For example, preheating can be performed by means of high-frequency induction heating, a gas burner, an infrared electric heater, a heating furnace, or application of an electron beam or a laser. In the step S 1 of preheating, the non-cermet part 2 is preheated to 800°C or lower in order to prevent the non-cermet part 2 from deformation under its own weight. In the step S1 of preheating, the non-cermet part 2 is preferably preheated to 500°C or higher.

### (Step of producing composite material)

The step S2 of producing a composite material is a step for producing a cermet composite material comprising the non-cermet part 2, the cermet part 1 formed on the non-cermet part 2 by additive manufacturing, and the intermediate layer 3 including both components of the non-cermet part 2 and components of the cermet part 1 between the non-cermet part 2 and the cermet part 1 (the intermediate layer 3 between the non-cermet part 2 and the cermet part 1 wherein both components of the non-cermet part 2 and components of the cermet part 1 are mixed). A form of additive manufacturing is not particularly limited, and examples thereof include directed energy deposition such as laser metal deposition, powder bed fusion, and plasma powder overlaying. In the case of additive manufacturing by directed energy deposition, powder materials of the cermet part 1 are melt with the use of a heat source selected from among a laser, an electron beam, a plasma, and an arc, the melted powder materials are adhered to and solidified on the non-cermet part 2, and the cermet part 1 is stacked and formed on the non-cermet part 2.

The powder materials of the cermet part 1 are powders including hard carbide powders of any one selected from among WC, NbC, TaC, MoC, and VC mixed with a metal binder of any one selected from among Co, Ni, and Fe. The powder materials of the cermet part 1 are preferably, for example, WC-Co cemented carbide powders including both WC hard carbide powders and a Co binder (WC-Co cemented carbide powders wherein both WC hard carbide powders and a Co binder are mixed).

In the step S2 of producing a composite material, the cermet part 1 is formed on the non-cermet part 2 by additive manufacturing, and, as a consequence, components of the cermet part 1 are mixed with components of the non-cermet part 2 at the interface between the cermet part 1 and the non-cermet part 2 and a region in the vicinity thereof. Thus, the intermediate layer 3 wherein both components of the cermet part 1 and components of the non-cermet part 2 are mixed is formed between the cermet part 1 and the non-cermet part 2, and a cermet composite material comprising the intermediate layer 3 between the cermet part 1 and the non-cermet part 2 is obtained.

In the step S1 of preheating, the non-cermet part 2 is preheated to 350°C or higher. Thus, cracking or peeling occurring between the cermet part 1 and the non-cermet part 2 can be suppressed in the step S2 of producing a composite material. In the step S1 of preheating, specifically, the non-cermet part 2 is preheated to a given temperature or higher. This lowers a cooling rate for materials to be melt-bonded at the time of additive manufacturing of the cermet part 1 in the step S2 of producing a composite material and suppresses hardening or low-temperature cracking caused by diffusive hydrogen in the cermet part 1.

In the step S1 of preheating, the non-cermet part 2 is preheated. This moderates the temperature gradient of the cermet part 1 at the time of additive manufacturing in the step S2 of producing a composite material and enables suppression of deformation caused by thermal stress and relief of residual stress. In the step S1 of preheating, the non-cermet part 2 is preheated to 500°C or higher. This can suppress generation of small cracks in the step S2 of producing a composite material.

### (Step of heat treatment)

The step S3 of heat treatment is a step for subjecting the cermet composite material 10 to heat treatment at 1000°C to 1300°C after the step S2 of producing a composite material. The method S10 for producing a cermet composite material may further comprise the step S3 of heat treatment. When the method S10 further comprises the step S3 of heat treatment, it is possible to diffuse or eliminate M₆C carbides or free carbons that are present in the cermet part 1 formed in the step S2 of producing a composite material.

M₆C carbides or free carbons are embrittlement phases. In the presence thereof, accordingly, toughness of the cermet part 1 is deteriorated. By diffusing or eliminating M₆C carbides or free carbons that are present in the cermet part 1 in the step S3 of heat treatment, accordingly, toughness of the cermet part 1 can be improved. Thus, the cermet part 1 can be preferably used for applications in which cracking is likely to occur, such as a case in which strong stress is applied. In order to further improve toughness of the cermet part 1 by more effectively diffusing or eliminating M₆C carbides or free carbons that are present in the cermet part 1, it is preferable that the cermet composite material 10 be subjected to heat treatment at 1200°C to 1300°C in the step S3 of heat treatment.

### (Others)

The method S10 for producing the cermet composite material according to the embodiment may further comprise a step of cutting for subjecting the cermet composite material to cutting (cutting and processing) before or after the step S3 of heat treatment. This can further improve shape accuracy of the cermet composite material. The cermet composite material according to the embodiment as described in the [Cermet composite material] section above may be produced by, for example, the method according to the embodiment.

### [Cermet tool]

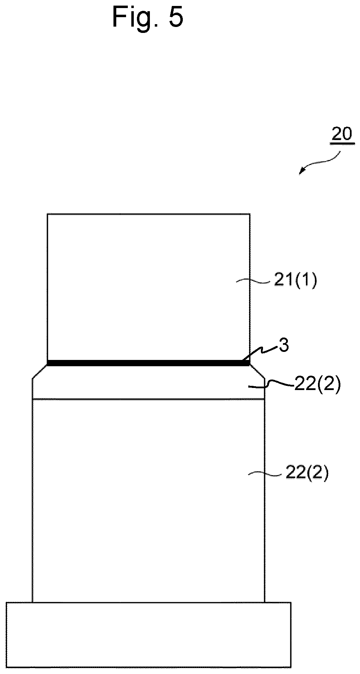

The cermet tool according to the embodiment is then described with the aid of Figure 1 A to Figure 4 and with reference to Figure 5. Figure 5 is a front view showing an example of the cermet tool according to the embodiment.

The cermet tool 20 shown in Figure 5 is a punch of a warm-hot forging die (mold). The cermet tool according to the embodiment is not limited to a punch of a warm-hot forging die. For example, the cermet tool 20 may be used as a tool that includes the acting face as the part for machining 21 configured to cut, shape, move, and hold a workpiece.

The cermet tool 20 according to the embodiment is a tool using the cermet composite material 10 according to the embodiment. The cermet tool 20 comprises the part for machining 21 configured to machine a workpiece and a base 22 configured to support the part for machining 21. The part for machining 21 of the cermet tool 20 is the cermet part 1 of the cermet composite material 10 according to the embodiment, and the base 22 of the cermet tool 20 is the non-cermet part 2 of the cermet composite material 10 according to the embodiment. That is, the cermet tool 20 comprises the intermediate layer 3 between the cermet part 1 constituting the part for machining 21 and the non-cermet part 2 constituting the base 22.

Conventional forging dies are often forging dies using tool steel that has excellent high-temperature strength and abrasion resistance. For warm-hot forging, however, such tool steel mainly containing Fe is softened at the forging temperature and causes a problem of short life of the die. The cermet tool 20 of the embodiment includes the cermet part 1 at the part for machining 21. Accordingly, it has excellent high-temperature strength and prolongs the life of the die.

A tool using a cermet such as a conventional cemented carbide is produced by mixing a Co-based alloy consisting of WC particles and a binder by sintering. While cermet is hard and has excellent abrasion resistance, it is poor in toughness, and it deteriorates due to mechanical impact and thermal shock involved in the thermal history. An effective way to improve the toughness of the cermet is to increase the Co content of the Co-based alloy. This, however, causes a problem of a large dimension change during sintering.

The cermet tool 20 of the embodiment can be produced by the method S10 for producing a cermet composite material according to the embodiment by additive manufacturing as described above. This enables near-net-shape forming of the part for machining 21 having a complexed shape and forming of a die having a shape and a function that conventional dies do not have.

The part for machining 21 formed by additive manufacturing has higher density compared with conventional tools produced by sintering, and a dimension change is small even if it is subjected to heat treatment after forming. In addition, the cermet tool 20 according to the embodiment uses the cermet composite material 10 according to the embodiment as described above. If the part for machining 21 consisting of the cermet part 1 is formed on the base 22 consisting of the non-cermet part 2 comprising a composition different from that of the cermet part 1, accordingly, peeling or cracking occurring between the part for machining 21 and the base 22 can be suppressed. More specifically, use of the non-cermet part 2 consisting of a Ni-based alloy including a given amount of Ti or a Ni-based alloy including given amounts of Nb and Ta in addition to Ti enables formation of the intermediate layer 3 with satisfactory toughness and hardness and increases a bond strength between the part for machining 21 and the base 22.

The embodiment can provide the cermet tool 20 that is crack-free; i.e., free from peeling or cracking between the part for machining 21 and the base 22, and has an excellent bond strength of the part for machining 21 consisting of the cermet part 1 that is tolerant to strong stress applied externally. Accordingly, the life of the cermet tool 20 can be prolonged as a tool used at high temperature, such as warm-hot forging. In addition, the raw material of the cermet is expensive. Accordingly, the cost for the raw material can be reduced by producing the part for machining 21 of the tool acting on a workpiece with the use of the cermet and other parts with the use of different materials.

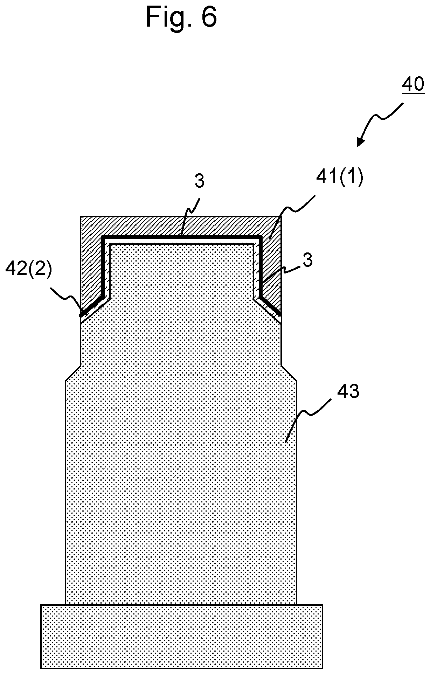

Figure 6 is a cross-sectional view showing another example of the cermet tool according to the embodiment.

The cermet tool 40 shown in Figure 6 is also a punch of a warm-hot forging die. The cermet tool 40 according to the embodiment is not limited to a punch of a warm-hot forging die, and it can be used for tools, such as a warm-hot forging die in another form or a press die.

The cermet tool 40 according to the embodiment is a tool using the cermet composite material 10 according to the embodiment. The cermet tool 40 comprises a part for machining 41 configured to machine a workpiece and a main body 43 of a base configured to support the part for machining 41 (a part opposite from the part for machining of the base), and the cermet tool 40 further comprises an underlayer 42 (a region on the part for machining side of the base) of the base provided between the main body 43 of the base and the part for machining 41. The part for machining 41 of the cermet tool 40 is the cermet part 1 of the cermet composite material 10 according to the embodiment, and the underlayer 42 of the base of the cermet tool 40 is the non-cermet part 2 of the cermet composite material 10 according to the embodiment.

The main body 43 of the base consists of a Fe-based alloy, and an example thereof is tool steel for hot working such as SKD61. Specifically, the part for machining 41 of the cermet tool 40 comprises the intermediate layer 3 between the cermet part 1 constituting the part for machining 41 and the non-cermet part 2 constituting the underlayer 42 of the base. The underlayer 42 (the non-cermet part 2) of the base of the cermet tool 40 is formed on the main body 43 of the base by additive manufacturing in accordance with the method of additive manufacturing as described in the (Step of producing composite material) section of the [Method for producing cermet composite material] section above with the use of powders of the Ni-based alloy constituting the non-cermet part described in the (Non-cermet part) section of the [Cermet composite material] section above as the powder material of the underlayer 42 of the base.

When the main body 43 of the base is made of the Fe-based alloy, heat treatment at 1000°C to 1300°C to eliminate M₆C carbides or free carbons is not preferable because it causes deterioration in hardness due to a dimension change or a metallic structure change. While the cermet tool 40 comprises a region including both components of the underlayer 42 and components of the main body 43 (a region wherein both components of the underlayer 42 and components of the main body 43 are mixed) formed in a region between the underlayer 42 and the main body 43, the amount of carbon or tungsten included in the main body 43 (e.g., the tool steel for hot working) of the base is smaller than that in the cermet part. Thus, anti-crack properties of the region formed between the underlayer 42 and the main body 43 of the base are sufficiently high. By selectively providing the cermet part with high abrasion resistance in a site of the tool with serious wear damage by additive manufacturing, a takt time required for production and thermal influence on the main body 43 of the base can be reduced. Regardless of whether the main body of the base is made of the Fe-based alloy, it is not necessary to perform heat treatment at high temperature. When the main body 43 of the base is made of the Fe-based alloy, as described above, heat treatment at high temperature is not preferable, and satisfactory anti-crack properties can be maintained at the interface without heat treatment at high temperature.

### [Examples]

Hereafter, the cermet composite material, the method for producing the same, and the cermet tool according to the embodiment are described in greater detail with reference to Examples and Comparative Examples.

At the outset, the materials of the non-cermet part; i.e., alloys comprising 6 different compositions from No. 1 to No. 6 shown in Table 1, were prepared. The units for the compositions shown in Table 1 are % by mass and "Bal" indicates the "balance."

**Table 1]**

| Alloy No. | Composition (% by mass) | | | | | | | | | | | | | | |
|---|---|---|---|---|---|---|---|---|---|---|---|---|---|---|---|
| | C | Si | Mn | P | S | Ni | Cr | Mo | Co | Cu | Al | Ti | Fe | B | Nb |
| 1 | 0.03 | 0.08 | 0.05 | 0 | 0.0002 | Bal | 18.6 | 3.08 | 0.04 | 0.02 | 0.56 | 0.94 | 24.2 | 0.0038 | - |
| 2 | - | - | - | - | - | Bal | - | - | - | - | - | 4.6 | - | - | - |
| 3 | - | - | - | - | - | Bal | - | - | - | - | - | 10.0 | - | - | - |
| 4 | - | - | - | - | - | Bal | - | - | - | - | - | 15.2 | - | - | - |
| 5 | - | - | - | - | - | Bal | 8.7 | - | - | - | - | 3.6 | 9.4 | - | - |
| 6 | 0.03 | 0.08 | 0.05 | - | - | Bal | 18.6 | 3.08 | 0.04 | 0.02 | 0.56 | 0.94 | 24.2 | 0.0038 | 5.08 |

### [Example 1]

At the outset, the Ni-based alloy of No. 2 shown in Table 1 was used as the non-cermet part, and the step of preheating was performed to preheat the non-cermet part to 500°C to 700°C. Subsequently, the step of producing a composite material was performed to form the cermet part on the non-cermet part by additive manufacturing to produce the cermet composite material shown in Figure 1 A comprising an intermediate layer including both components of the non-cermet part and components of the cermet part (an intermediate layer wherein both components of the non-cermet part and components of the cermet part are mixed) between the non-cermet part and the cermet part. Additive manufacturing was performed using a type of a cermet; i.e., WC-Co cemented carbide powder comprising the Co content of 40% by mass, as the material of additive manufacturing and by laser deposition that was the directed energy deposition. The cermet part was formed by depositing the material so that the height reached 20 mm with 9 paths for one layer, so as to stack approximately 40 layers. Table 2 shows the conditions for additive manufacturing. The conditions for additive manufacturing shown in Table 2 were set to keep the amount of heat input to the powder relatively low and suppress cracking between the non-cermet part and the cermet part. In Example 1, the step of heat treatment at, for example, 1000°C to 1300°C was not performed after the step of producing a composite material.

**Table 2]**

| Laser output (W) | Rate (mm/min) | Amount of heat input (kJ/cm) | Powder feed rate (g/cm) | Amount of heat input to powder (kJ/g) | Defocus length (mm) | Carrier gas flow rate (L/mm) | Shield gas flow rate (L/min) | Side gas flow rate (L/min) |
|---|---|---|---|---|---|---|---|---|
| 1200 | 100 | 7.2 | 0.2 | 36 | 20 | 5.5 | 20 | 10 |

### [Example 2]

The cermet composite material was produced in the same manner as in Example 1 except that the material of No. 3 shown in Table 1 was used as the non-cermet part.

### [Example 3]

The cermet composite material was produced in the same manner as in Example 1 except that the material of No. 5 shown in Table 1 was used as the non-cermet part.

### [Example 4]

The cermet composite material was produced in the same manner as in Example 1 except that the material of No. 6 shown in Table 1 was used as the non-cermet part.

### [Comparative Example 1]

The cermet composite material was produced in the same manner as in Example 1 except that the material of No. 1 shown in Table 1 was used as the non-cermet part.

### [Comparative Example 2]

The cermet composite material was produced in the same manner as in Example 1 except that the material of No. 4 shown in Table 1 was used as the non-cermet part.

### [Evaluation]

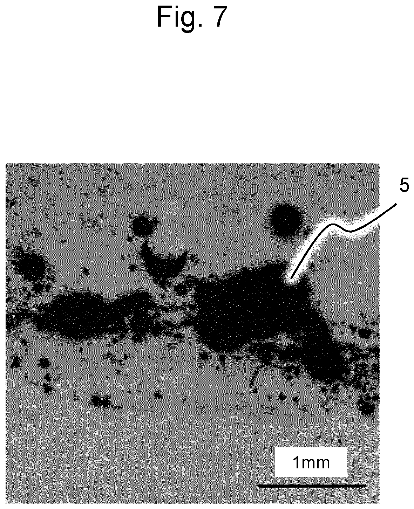

The cermet composite materials produced in Example 1 to Example 4, Comparative Example 1, and Comparative Example 2 were subjected to liquid penetrant examination and cross-sectional observation. As a result, good cermet composite materials without cracking or defects were produced in Example 1 to Example 4 and Comparative Example 1. In contrast, incomplete fusion was observed in the intermediate layer at a significant level in Comparative Example 2. Table 3 shows the "presence of cracking or defects" by "good" or "poor." Figure 7 is a cross-sectional photograph showing the results of observation of incomplete fusion in the intermediate layer of Comparative Example 2. As a result of component analysis of the inside of the incomplete fusion 5, titanium oxide was detected. This indicates that an excess amount of titanium in the non-cermet part may cause severe oxidation at the time of additive manufacturing, which is led to incomplete fusion.

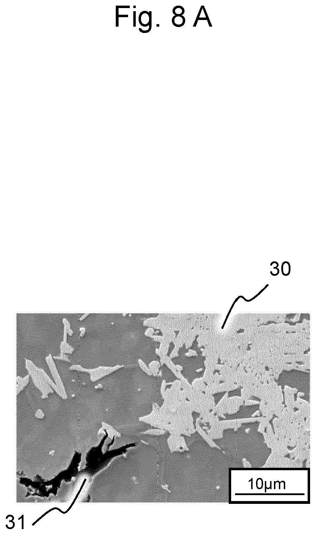

Figure 8 A to Figure 8 F each show a backscattered electron image (BEI) of a crystalline structure in the intermediate layer of Comparative Example 1, Comparative Example 2, Example 1, Example 2, Example 3, and Example 4, respectively, obtained by SEM.

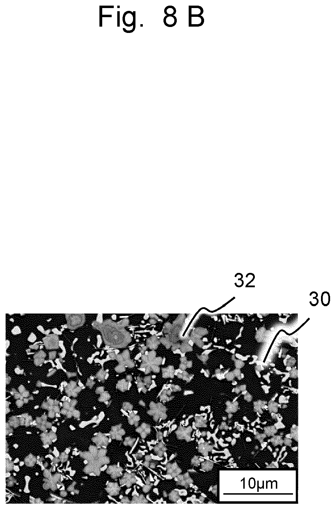

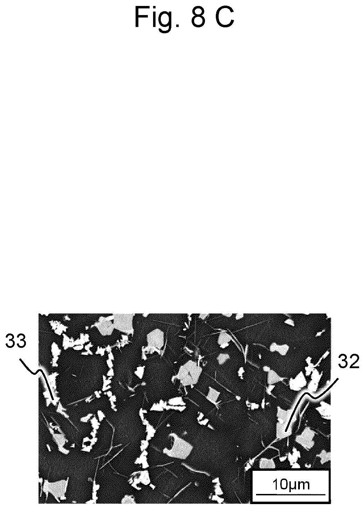

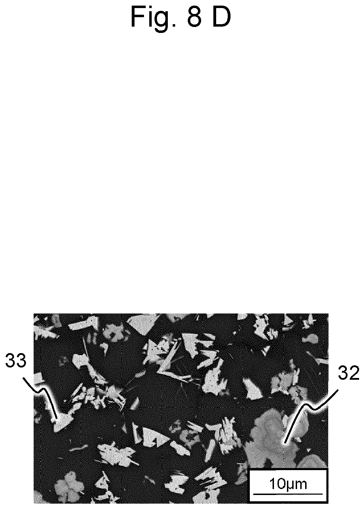

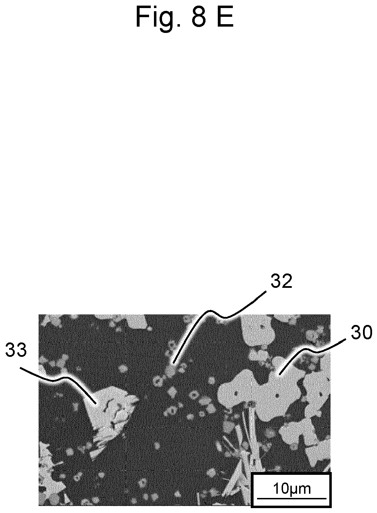

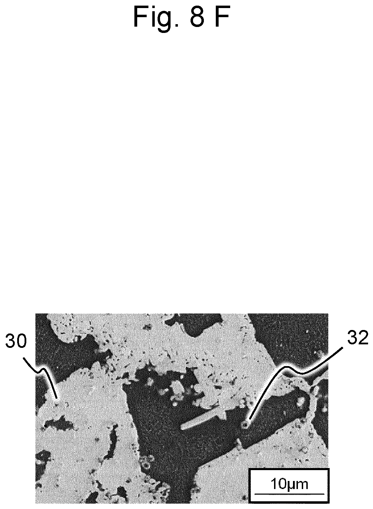

As shown in Figure 8 A, coarse M₆C carbide 30 and free carbon 31 were observed in the intermediate layer of the material of Comparative Example 1 using the non-cermet part with small contents of Ti, Nb, and Ta. As shown in Figure 8 C and Figure 8 D, in contrast, structures with the NaCl-type MC carbides 32 and the hexagonal tungsten carbides 33 finely dispersed in the intermediate layers were obtained in Example 1 and Example 2 using the non-cermet parts with the Ti contents of 4.6% by mass and 10.0% by mass, and no or only an ignorable amount of the M₆C carbides 30 or the free carbons 31 is crystallized. As shown in Figure 8 E and Table 3 below, in Example 3, the M₆C carbides 30 are observed in the intermediate layer at the Ti content of 3.6% by mass in the non-cermet part, although the amount thereof is not large, and the total area ratio of the NaCl-type MC carbides 32 and the hexagonal tungsten carbides 33 is larger than the area ratio of the M₆C carbides 30. When the Ti content is as small as 0.94% by mass and the Nb content is 5.08% by mass in the material of Example 4, as shown in Figure 8 F, crystallization of the MC carbides 32 is observed, and the amount of free carbons 31 is also reduced. In the material of Comparative Example 2 using the non-cermet part with the Ti content of 15.0% by mass or more, as shown in Figure 8 B, a small amount of the M₆C carbides 30 is observed in the intermediate layer, in addition to the MC carbides 32.

Table 3 below shows thickness of the intermediate layers of Example 1 to Example 4, Comparative Example 1, and Comparative Example 2. Table 3 below also shows the area ratio of the M₆C carbides in the intermediate layers of Example 1 to Example 4, Comparative Example 1, and Comparative Example 2. The area ratio of the M₆C carbides was determined by scanning an area of 200 µm × 200 µm in the center of the intermediate layer on the plane cut along the direction of stacking the cermet composite materials by the EBSD method with the scan-step of 0.7 µm and determining the area ratio of the M₆C carbides observed on the measured screen.

Table 3 below shows the area ratio of free carbon, MC carbide, and tungsten carbide in the intermediate layers of Example 1 to Example 4, Comparative Example 1, and Comparative Example 2. The area ratio of the free carbon, the MC carbide, and the tungsten carbide was determined by digitizing the BSE images observed at 1000× magnification.

Table 3 below shows the results of structure evaluation in terms of the following: "Excellent" the material with the M₆C carbide area ratio of 20% or less and the free carbon area ratio of 1% or less; "Good" the material with the M₆C carbide area ratio of 20% or less or the free carbon area ratio of 1% or less; and "Fail" the material without any of such area ratios.

While examining cermet composite materials that can improve the bond strength, as described above, toughening of an intermediate layer was examined. As a result of studies with a focus on a combination of a cermet part and a non-cermet part, it was confirmed that an intermediate layer including a component of a cermet part and a component of a non-cermet part with a small content of M₆C carbides or free carbons and excellent anti-crack properties could be formed by selecting, for the non-cermet part, a Ni-based alloy including 3.0% by mass to 15.0% by mass of Ti or a Ni-based alloy including 0.5% by mass to less than 3.0% by mass of Ti and 4% by mass to 15% by mass of Nb and Ta in total, in addition to Ti.

**[Table 3]**

| | Alloy No. | Thickness of intermediate layer (µm) | Presence of cracking or defect | Structure of intermediate layer | | | | |
|---|---|---|---|---|---|---|---|---|
| | | | | M₆C carbide area ratio (%) | Free carbon area ratio (%) | MC carbide area ratio (%) | Tungsten carbide area ratio (%) | Evaluation |
| Ex. 1 | 2 | 850 | Good | 1.6 | 0 | 7.71 | 5.63 | Excellent |
| Ex. 2 | 3 | 1400 | Good | 2.1 | 0 | 13.3 | 11.47 | Excellent |
| Ex. 3 | 5 | 1950 | Good | 8.8 | 0 | 7.94 | 6.90 | Excellent |
| Ex. 4 | 6 | 1800 | Good | 22.1 | 0.29 | 4.62 | 0 | Good |
| Comp. Ex. 1 | 1 | 1930 | Good | 24.8 | 1.95 | 0.4 | 0 | Fail |
| Comp. Ex. 2 | 4 | 2230 | Poor | 11.2 | 0 | 24.78 | 0 | Excellent |

In order to observe the intermediate layer shown in Example 4 in detail, microstructure observation was performed under a transmission electron microscope (TEM) and a scanning transmission electron microscope (STEM).

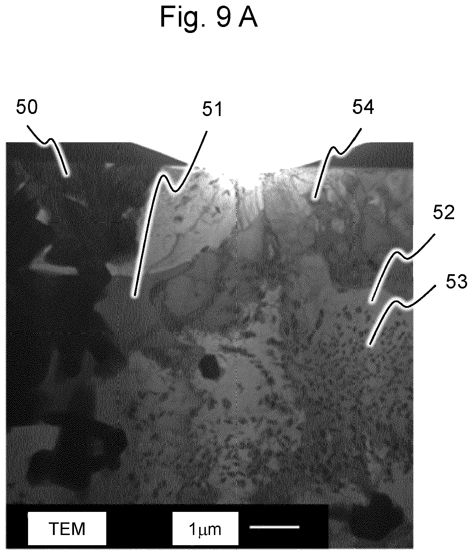

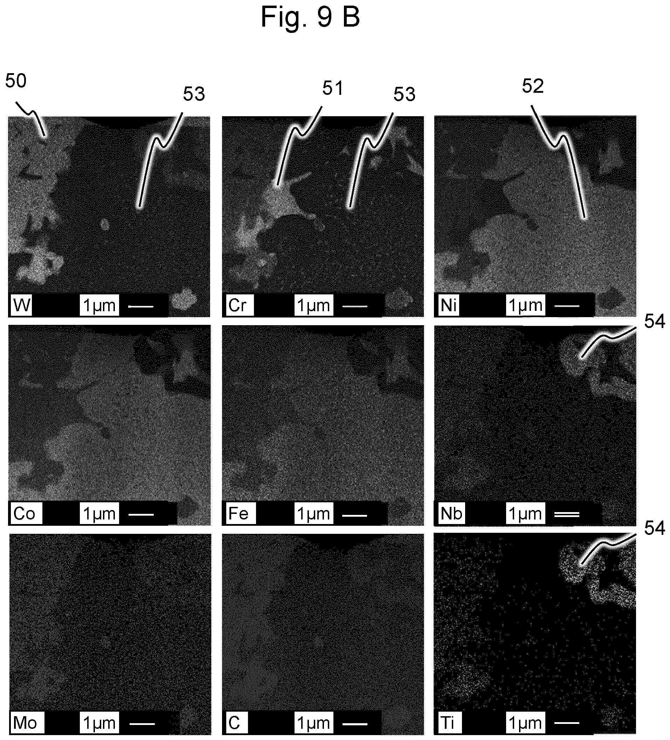

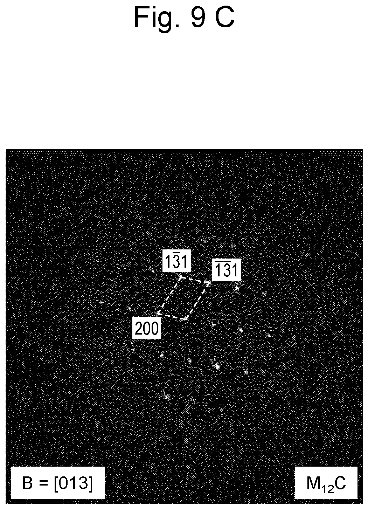

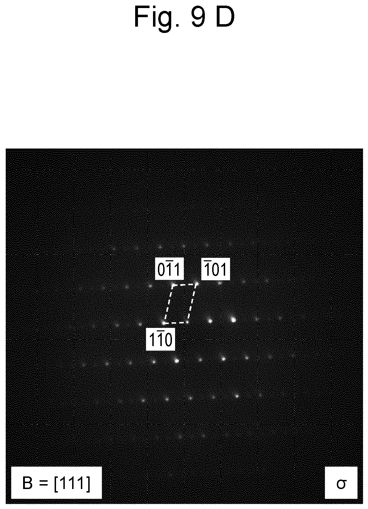

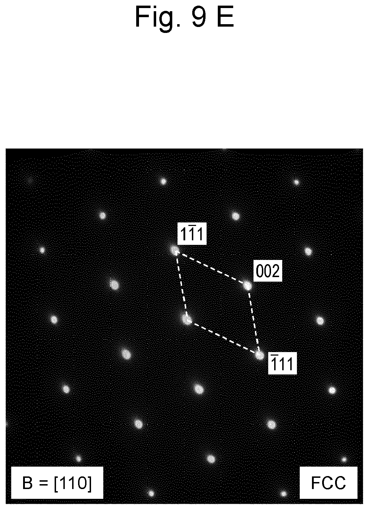

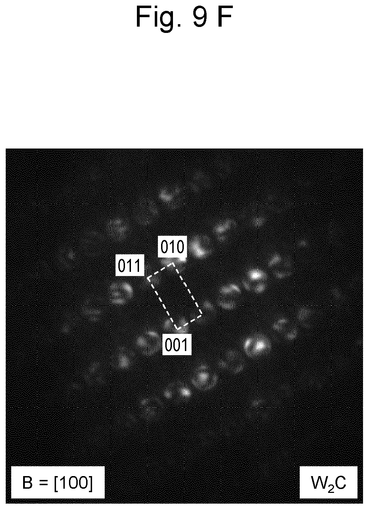

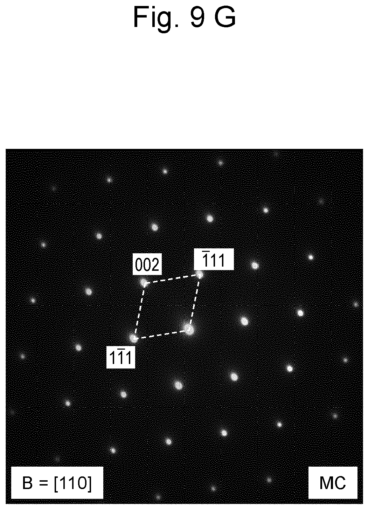

Figure 9 A is a TEM image of a crystalline structure in the intermediate layer of Example 4 obtained by TEM observation and Figure 9 B shows the results of elemental mapping of a crystalline structure in the intermediate layer of Example 4 performed by energy dispersive X-ray spectroscopy (EDX). Figure 9 C to Figure 9 G each show the results of selected-area electron diffraction of the phase 50 to the phase 54 observed in Figure 9 A and Figure 9 B. By performing selected-area electron diffraction, diffraction patterns each corresponding to a crystalline structure of each phase appear, and the crystalline structure can be identified by analyzing the distance and the angle of the diffraction pattern. As a result of analysis of the selected-area electron diffraction patterns, the dendritic phase 50 with concentrated W was found to be M₁₂C carbide. The M₁₂C carbide has a crystalline structure and properties that are very similar to those of the M₆C carbide. Also, the phase 51 with highly concentrated Cr was found to be the σ phase, which is a brittle intermetallic compound. In addition, the parent phase 52 was found to be a face-centered cubic (FCC) and dispersing of fine W₂C carbides 53 was observed in the FCC phase. Further, the phase 54 with concentrated Ti and Nb was found to be MC carbide.

The area ratio of the σ phase can be determined by subjecting an image of Cr elemental mapping to image processing. To this end, the intermediate layer shown in Example 4 was subjected to EDX elemental mapping at 300 × magnification, and the area ratio of the σ phase was calculated to be 8.3%.

The embodiments of the present invention are described above with reference to the figures and the like. It should be noted that the present invention is not limited to the embodiments described above. Any embodiments having substantially the identical constitution and similar effects with the technique disclosed in the claims of the present invention are within the technical scope of the present invention, and the present invention includes various modified examples. For example, the embodiments are intended to illustrate the present invention, and the present invention is not limited to embodiments comprising all the constitutions described herein. Also, a part of a constitution according to an embodiment may be substituted with a constitution according to another embodiment, and a constitution according to another embodiment may be added to a constitution according to an embodiment. In addition, a part of a constitution according to an embodiment may be supplemented with, deleted, or substituted with other constitutions.

### Reference Signs List

1: Cermet part
2: Non-cermet part
3: Intermediate layer
4: Hard coating
5: Incomplete fusion
10: Cermet composite material
20: Cermet tool
21: Part for machining
22: Base
30: M₆C carbide
31: Free carbon
32: MC carbide
33: Tungsten carbide
40: Cermet tool
41: Part for machining
42: Underlayer
43: Main body of base
50: M₁₂C carbide
51: σ phase
52: FCC
53: W₂C carbide
54: MC carbide
S1: Step of preheating
S2: Step of producing composite material
S3: Step of heat treatment
S10: Method for producing cermet composite material

All publications, patents, and patent applications cited herein are incorporated herein by reference in their entirety.

## Claims

1. A cermet composite material comprising a cermet part including hard carbides dispersed in a metallic phase and a non-cermet part consisting of a Ni-based alloy including 50% by mass or more of Ni with the cermet part being formed on the non-cermet part by additive manufacturing, wherein the cermet composite material comprises an intermediate layer including both components of the cermet part and components of the non-cermet part between the cermet part and the non-cermet part, and the non-cermet part consists of the Ni-based alloy including 3.0% by mass to 15.0% by mass of Ti or the Ni-based alloy including 0.5% by mass to less than 3.0% by mass of Ti and 4% by mass to 15% by mass of Nb and Ta in total.

2. The cermet composite material according to claim 1, wherein the intermediate layer includes carbide particles dispersed therein.

3. The cermet composite material according to claim 2, wherein the carbide particles include at least one selected from the group of MC carbide and tungsten carbide.

4. The cermet composite material according to claim 2, wherein the carbide particles include MC carbide and the area ratio of the MC carbide is 3% to 24%.

5. The cermet composite material according to any one of claims 1 to 4, wherein the intermediate layer has a thickness of 500 µm or more.

6. The cermet composite material according to any one of claims 1 to 5, wherein, when the number of counted X-rays for an element constituting the hard carbide in the cermet part is measured using an electron probe micro analyzer, the number of counted X-rays decreases from the cermet part side toward the non-cermet part side within the intermediate layer.

7. The cermet composite material according to any one of claims 1 to 6, wherein the cermet part includes at least one selected from the group of Co, Ni, and Fe in an amount of 20% by mass to 50% by mass with the balance consisting of hard carbide.

8. The cermet composite material according to claim 7, wherein the cermet part consists of WC-Co-based cemented carbide with the Co content of 20% by mass to 50% by mass with the balance consisting of tungsten carbide.

9. The cermet composite material according to any one of claims 1 to 8, wherein the non-cermet part includes 19.0% by mass or less of Cr and 25.0% by mass or less of Fe and the area ratio of an intermetallic compound including the σ phase and the Laves phase is 8% or less in the intermediate layer.

10. The cermet composite material according to any one of claims 1 to 9, which further comprises a hard coating consisting of carbide, nitride, oxide, or carbonitride of at least one selected from the group consisting of Ti, Al, and Cr provided on the surface of the cermet part.

11. A method for producing a cermet composite material comprising a cermet part including hard carbides dispersed in a metallic phase and a non-cermet part consisting of a Ni-based alloy including 50% by mass or more of Ni and 3.0% to 15.0% by mass of Ti or a Ni-based alloy including 50% by mass or more of Ni, 0.5% to less than 3.0% by mass of Ti, and 4% to 15% by mass of Nb and Ta in total comprising:
a step of preheating for preheating the non-cermet part to 350°C to 800°C; and
a step of producing a composite material for producing a cermet composite material comprising a cermet part formed on the non-cermet part by additive manufacturing and an intermediate layer including both components of the non-cermet part and components of the cermet part between the non-cermet part and the cermet part.

12. The method for producing a cermet composite material according to claim 11, wherein the step of preheating is a step for preheating the non-cermet part to 500°C to 800°C.

13. The method for producing a cermet composite material according to claim 11 or 12, which further comprises a step of heat treatment for subjecting the cermet composite material to heat treatment at 1000°C to 1300°C after the step of producing a composite material.

14. The method for producing a cermet composite material according to claim 13, wherein the step of heat treatment is a step for subjecting the cermet composite material to heat treatment at 1200°C to 1300°C.

15. A cermet tool using the cermet composite material according to any one of claims 1 to 10, wherein the cermet tool comprises a part for machining configured to machine a workpiece and a base configured to support the part for machining, the part for machining is the cermet part, and a region on the part for machining side of the base is the non-cermet part.
